# FASCICULE DE BREVET EUROPEEN

(11) **EP 0 938 623 B1**
(45) Date de publication et mention de la délivrance du brevet: **17.04.2002**
(21) Numéro de dépôt: 97947085.3
(22) Date de dépôt: 18.11.1997
(51) Int. Cl.: E21B 44/00

(54) **DISPOSITIF DE FORAGE**
BOHREINRICHTUNG
DRILLING DEVICE

(30) Priorité: 18.11.1996 FR 9614248
(43) Date de publication de la demande: 01.09.1999
(73) Titulaire: ETABLISSEMENTS MONTABERT, F-69800 Saint-Priest Rhône (FR)
(72) Inventeur: CADET, Bernard, F-69300 Caluire (FR)
(74) Mandataire: Maureau, Philippe
(86) Numéro de dépôt international: FR9702075
(87) Numéro de publication internationale: WO9822693

(56) Documents cités:
- GB-A- 1 322 493
- US-A- 4 064 950
- GNODTKE: "Erfahrungen mit hydraulischen Bohrhämmern im Steinkohlenbergbau" GLÜCKAUF, vol. 116, no. 11, juin 1980, ESSEN, DEUTSCHLAND, pages 548-552, XP002034412

## Description

La présente invention a pour objet un dispositif de forage employé notamment pour le forage de trous destinés à l'extraction de roches et minerais, dans lequel l'outil de forage est animé d'un mouvement de rotation, cet ensemble étant monté sur un dispositif d'avance qui permet d'exercer une poussée sur l'outil lors du forage.

Il est connu que le couple de rotation créé par le contact de l'outil ou tête de forage avec le terrain augmente avec la force de poussée appliquée.

Il est donc nécessaire de prévoir des dispositifs de régulation permettant d'adapter la poussée exercée sur l'outil au couple maximum admissible par le dispositif d'entraînement, afin de protéger l'outil utilisé vis-à-vis des risques de blocage dans le terrain foré.

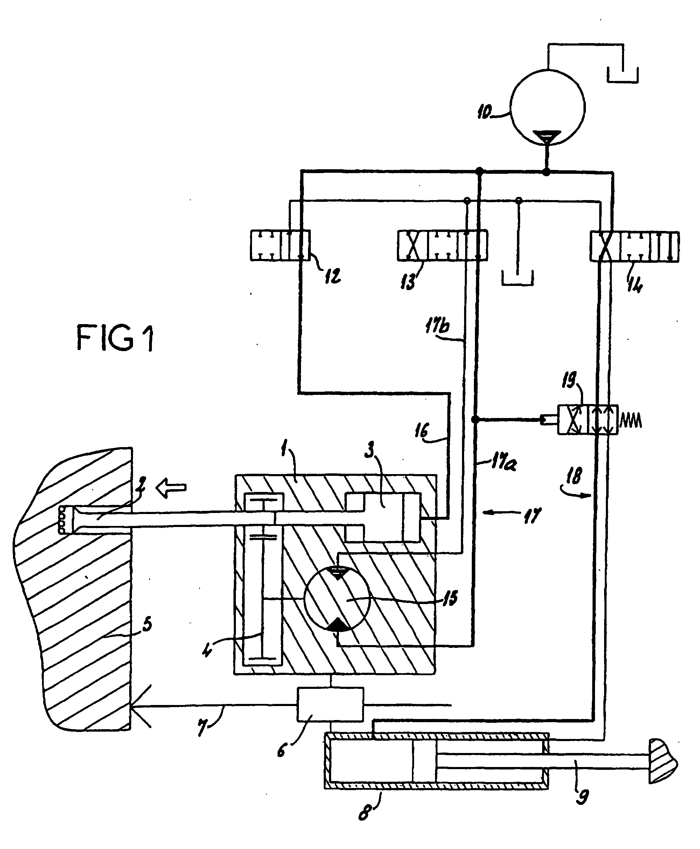

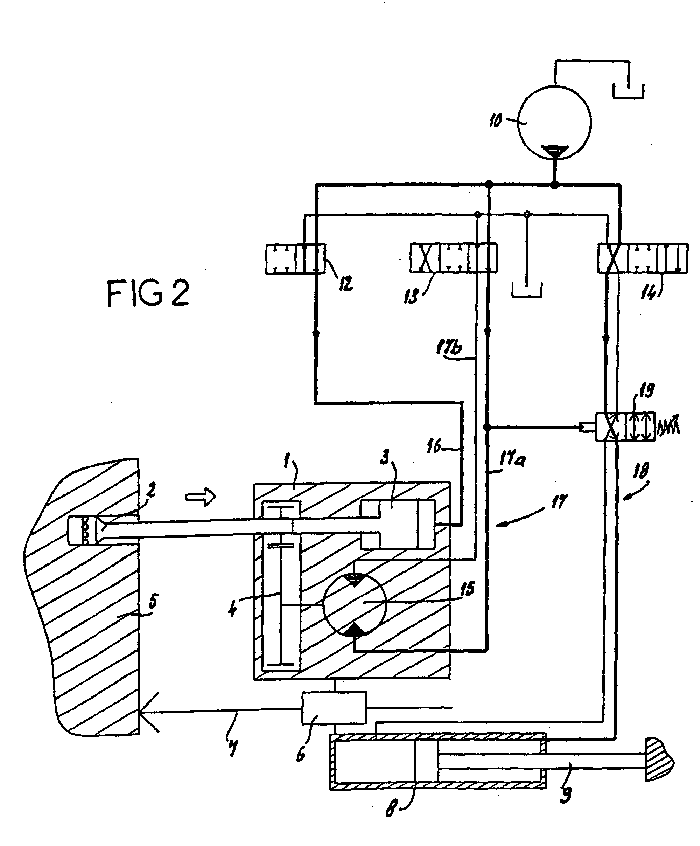

Les figures 1 et 2 représentent très schématiquement un dispositif de forage roto-percutant de type connu, dans deux positions de fonctionnement. Ces figures montrent un marteau perforateur 1 équipé d'un outil 2 associé, d'une part, à un dispositif de frappe 3 et, d'autre part, à un dispositif d'entraînement en rotation 4. Le marteau perforateur est monté déplaçable vis-à-vis du terrain 5 dans lequel un forage doit être effectué à l'aide d'un système d'avance 6 monté sur une glissière 7. Le système d'avance comprend un vérin hydraulique 8 dont le corps est solidaire du dispositif 6 et dont la tige 9 prend appui sur un point fixe. Les différents mouvements sont obtenus à partir d'une pompe hydraulique 10 qui alimente, par l'intermédiaire de trois distributeurs respectivement 12, 13 et 14, le dispositif de frappe 3, un moteur hydraulique 15, et le vérin 8. Les liaisons sont réalisées par l'intermédiaire d'une série de flexibles respectivement 16, 17 et 18. Le circuit d'alimentation du moteur hydraulique d'entraînement en rotation de l'outil est constitué des flexibles entre la pompe hydraulique 10 et le distributeur 13, le distributeur 13, le flexible 17a, le moteur de rotation 15, le flexible de retour 17b et le flexible entre le distributeur 13 et le retour à l'air libre. Un dispositif 19 inverseur de circuit est placé dans le circuit situé entre le distributeur 14 et le vérin 8 d'avance du dispositif perforateur. Le système inverseur 19 est piloté par la pression de rotation du moteur 15 assurant l'entraînement en rotation du perforateur. La pression de rotation maximale admissible à partir de laquelle le système inverseur réagit est réglable. La prise d'informations de ce système est néanmoins très éloignée de l'entrée du moteur 15 pour des raisons d'encombrement, ce qui conduit à des longueurs de flexibles très importantes.

En dessous de la pression de rotation maximale admissible, l'alimentation en fluide des différents éléments moteurs se fait, comme montré à la figure 1, suivant les flexibles représentés en traits forts. Le système inverseur 19 est dans sa position de repos et n'agit pas sur le circuit d'avance. Dans le cas où l'outil 2 se bloque dans le terrain, la pression de rotation augmente. Lorsque la pression dépasse une valeur prédéterminée réglée sur le système inverseur 19, celui-ci inverse le sens d'alimentation du vérin 8, comme montré à la figure 2, permettant le recul de l'outil.

Dans un tel cas, la pression hydraulique de rotation du moteur n'est pas mesurée directement, et le perforateur se trouve très éloigné du système de commande. La pression mesurée est la somme de la pression de rotation du moteur et des pertes de charge en ligne à l'intérieur du circuit constitué par le flexible 17. Or, les pertes de charge dans un circuit sont très variables en fonction de la température, qui influe sur la viscosité, et du débit du fluide hydraulique.

Pour travailler dans toutes les conditions, il faut régler le dispositif d'inversion 19 à une valeur telle que la pression de rotation maximale admissible soit égale à la pression de rotation augmentée de la perte de charge maximale.

La pression de rotation due au couple mécanique étant constante, les pertes de charge sont elles, variables en fonction de la température. La pression mesurée est donc variable en fonction de la température. Ce type de dispositif ne permet pas de faire un réglage fin du système inverseur.

Pour remédier à ces inconvénients, la Demanderesse exploite un perforateur dans lequel le débit de sortie du moteur est dirigé vers l'entrée de la partie assurant la frappe. Un débit identique est dirigé sur la partie assurant la frappe et vient se cumuler au débit de sortie du moteur assurant la rotation de l'outil. La mesure du couple de rotation se fait par mesure différentielle de la pression entre l'entrée et la sortie du moteur de rotation. Dans ce cas, la pression de rotation mesurée est égale à la pression de rotation aux bornes du moteur, excluant les pertes de charge du circuit de rotation.

Cette solution permet d'actionner correctement le système inverseur. Mais son intégration complique la réalisation des autres fonctions hydrauliques, du fait de la dépendance des circuits de rotation et de frappe du perforateur.

Différents systèmes connus permettent d'inverser le système d'avance d'un perforateur lorsque le couple de rotation augmente.

Le document GNODTKE concerne un dispositif à percussions équipé d'un système d'avance, dans lequel la pression est mesurée à l'aide d'une soupape de comparaison pour agir sur le moteur hydraulique d'avance et éviter le blocage de la broche à l'intérieur de la roche.

Le document GB-A-1 322 493 concerne un appareil de foration comportant un moteur hydraulique entraînant une broche et un mécanisme d'avance pour faire avancer la broche, un dispositif de mesure du couple réagissant à la pression de fluide appliquée au moteur hydraulique. Ce dispositif mesure le couple exercé sur la broche de foration, et un dispositif de commande de l'avance sous forme d'une valve, commande l'écoulement du fluide hydraulique vers le mécanisme d'avance, en fonction de la pression mesurée, afin d'inverser la pression hydraulique du fluide fourni au mécanisme d'avance, si le couple sur la broche dépasse une valeur déterminée.

Le document US-A-4 064 950 décrit une machine de foration possédant une broche entraînée en rotation par l'intermédiaire d'un moteur hydraulique. La broche est montée sur un support permettant une avance lors du forage dans la roche. Le support est avancé et retiré au moyen d'un moteur hydraulique. Le moteur hydraulique d'entraînement en rotation et le moteur d'avance sont montés en série, de telle sorte que si la résistance à la rotation augmente et s'accompagne d'une augmentation de pression de fluide à l'intérieur du moteur hydraulique, il se produit une diminution de la force exercée par le moteur d'avance hydraulique, afin d'éviter des détériorations de la broche.

Le but de l'invention est de fournir un dispositif de forage qui permette de s'affranchir des pertes de charge du circuit hydraulique alimentant le moteur d'entraînement en rotation de l'outil, en raison du caractère variable de ces pertes de charge en fonction de la température et du débit du fluide hydraulique, tout en permettant de conserver un réglage optimal de la valeur maximale du couple de rotation admissible sur toute la plage de fonctionnement du dispositif, sans impliquer des solutions techniques complexes, notamment d'un point de vue hydraulique.

A cet effet, le dispositif de forage qu'elle concerne, du type comportant une unité de forage dont l'outil est entraîné en rotation à partir d'un moteur hydraulique associé à un dispositif d'avance permettant de créer une force d'appui de l'unité de forage sur le terrain, les différents organes d'actionnement étant entraînés à partir d'au moins une pompe hydraulique, à travers un ensemble de distributeurs hydrauliques et un ensemble de tubulures, telles que des flexibles, les deux tubulures d'alimentation du dispositif d'avance du système de forage étant équipées d'un inverseur du sens de circulation du fluide dans le dispositif d'avance, est caractérisé en ce que sur l'une des branches du circuit d'alimentation du moteur hydraulique d'entraînement de l'outil est monté un dispositif de mesure du débit et de la viscosité du fluide hydraulique dont les caractéristiques de pertes de charge sont proportionnelles à celles du circuit hydraulique d'alimentation du moteur d'entraînement en rotation de l'outil, entre deux points connus du circuit situés de part et d'autre du moteur, fournissant en permanence une information de perte de charge à un dispositif de compensation permettant de soustraire la perte de charge calculée créée par l'ensemble des éléments du circuit, de la différence de pression mesurée entre ces deux mêmes points, le dispositif de compensation générant, si le résultat de cette opération dépasse une valeur prédéterminée, un signal d'actionnement de l'inverseur du sens de circulation du fluide d'alimentation du dispositif d'avance.

Un tel dispositif permet d'inverser automatiquement le sens de déplacement du perforateur sur sa glissière pour éviter le blocage de l'outil de forage dans le sol lorsque la pression de rotation dépasse la pression de rotation maximale admissible.

Le dispositif de mesure envoie au dispositif de compensation une mesure de la perte de charge proportionnelle à celle du circuit de rotation.

Le dispositif de compensation utilise cette information pour actionner le système inverseur si l'augmentation de pression de rotation est due à une augmentation du couple mécanique.

Si l'augmentation de pression de rotation est due à une variation des pertes de charge du circuit de rotation, le système inverseur n'est pas actionné.

Le dispositif de mesure, le dispositif de compensation et l'inverseur ainsi que la transmission des informations entre ces différents éléments peuvent être mécaniques, hydrauliques, pneumatiques, électroniques ou électriques.

L'avantage de cette structure réside en ce que les variations de pression de fluide entraînant le moteur d'entraînement en rotation du système de forage dues aux variations de perte de charge du circuit n'affectent pas la valeur de la pression de rotation maximale admissible. Seule la variation de la pression de rotation due au contact entre l'outil et le terrain entraîne une réaction du système inverseur.

Le dispositif de mesure peut être constitué par un étranglement.

Suivant une autre forme d'exécution, ce dispositif de forage comporte un dispositif de mesure électrique ou électronique constitué par un capteur de pression différentielle analogique ou numérique ou un capteur de température associé à un débitmètre, générant un signal actionnant un système de compensation hydraulique ou électrique agissant sur l'inverseur.

Le dispositif de compensation peut être constitué par un tiroir de régulation monté coulissant dans un alésage et soumis respectivement aux pressions de fluide hydraulique en amont et en aval de l'étranglement. Le tiroir peut être relié mécaniquement à l'inverseur pour actionner directement celui-ci, ou le déplacement du tiroir peut être mesuré par un dispositif potentiométrique de type électrique ou hydraulique, qui génère un signal de sortie qui actionne l'inverseur.

Suivant une autre possibilité, l'inverseur est intégré au dispositif de compensation dont le tiroir comporte plusieurs gorges décalées axialement et formant parties des deux branches du circuit d'alimentation hydraulique du dispositif d'avance du perforateur, pour permettre la circulation du fluide dans deux sens opposés en fonction de la position axiale du tiroir.

Selon une autre forme d'exécution, il comporte un potentiomètre hydraulique ou pneumatique possédant un tiroir dont les extrémités sont soumises aux pressions hydrauliques respectivement en amont et en aval de l'étranglement et présentant une gorge centrale alimentant l'inverseur soit à partir d'une gorge reliée à une source haute pression, soit à une gorge reliée à une source basse pression, suivant la position du tiroir.

De toute façon, l'invention sera bien comprise à l'aide de la description qui suit, en référence au dessin schématique annexé représentant, à titre d'exemples non limitatifs plusieurs formes d'exécution de dispositif :
Figures 1 et 2 sont deux vues dans deux positions de fonctionnement d'un dispositif de forage roto-percutant de type connu ;
Figure 3 est une vue d'un dispositif roto-percutant conforme à l'invention, de même type que celui des figures 1 et 2 ;
Figures 4a à 11 sont des vues correspondant à huit formes d'exécution différentes du dispositif de mesure ;
Figure 12 est une vue d'une forme d'exécution du dispositif de mesure et du dispositif de compensation ;
Figure 13 est une vue très schématique d'un dispositif de mesure et d'un dispositif de compensation ;
Figures 14 et 15 sont deux variantes d'un dispositif de mesure et d'un dispositif de compensation mettant en oeuvre un potentiomètre hydraulique ;
Figure 16 est une vue schématique d'un dispositif dans lequel la mesure est intégrée au dispositif de compensation.

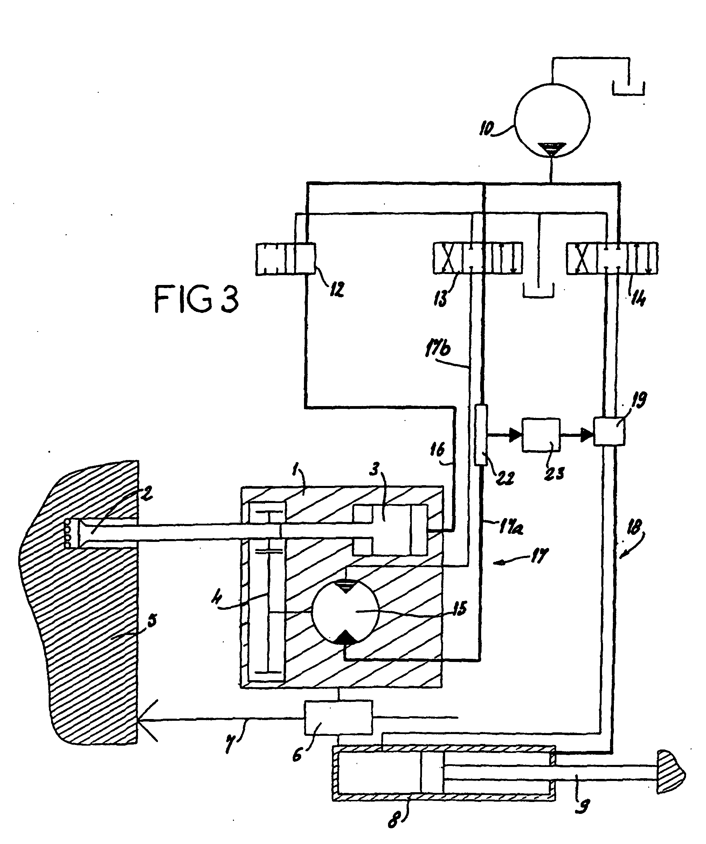

La figure 3 représente un dispositif similaire à celui de figures 1 et 2, dans lequel les mêmes éléments sont désignés par les mêmes références que précédemment. Dans ce dispositif, est prévu un dispositif 22 de mesure de la perte de charge hydraulique placé en ligne dans le circuit hydraulique alimentant le moteur 15 d'entraînement en rotation de l'outil. Ce dispositif mesure à tout moment la viscosité et le débit qui passent dans le circuit et génère un signal de sortie proportionnel à la perte de charge qui existe dans l'ensemble du circuit hydraulique.

L'information de perte de charge est envoyée à un dispositif de compensation 23 qui utilise en permanence cette information afin de compenser les effets des pertes de charge dans le circuit hydraulique et actionner l'inverseur 19.

Le dispositif de mesure peut être mécanique, électrique, hydraulique, pneumatique, sensible à la variation de la viscosité et au débit de fluide qui le traverse.

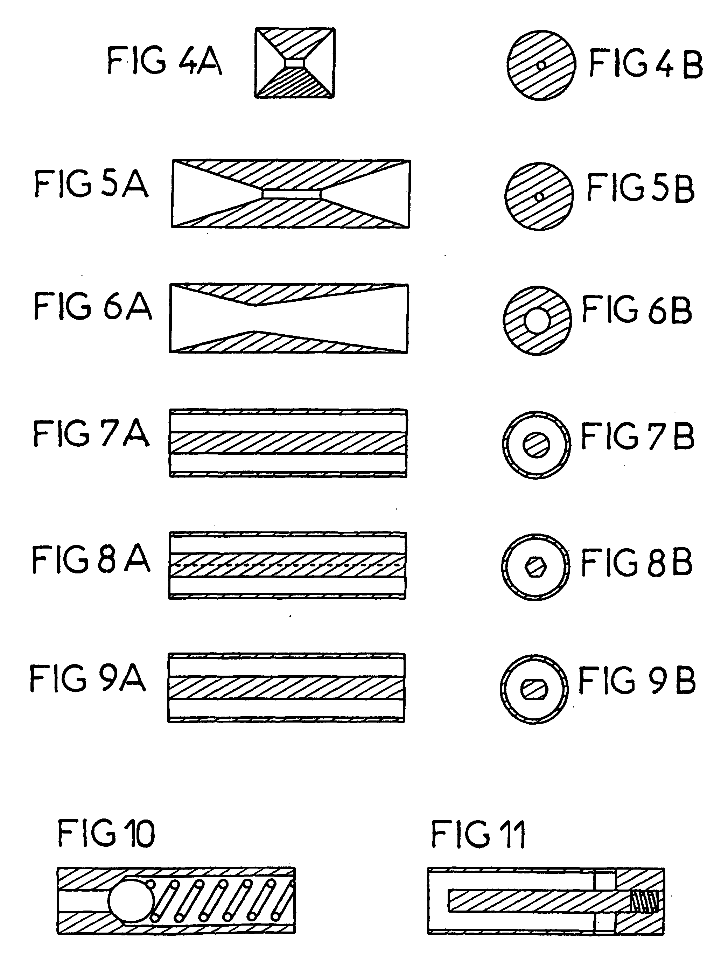

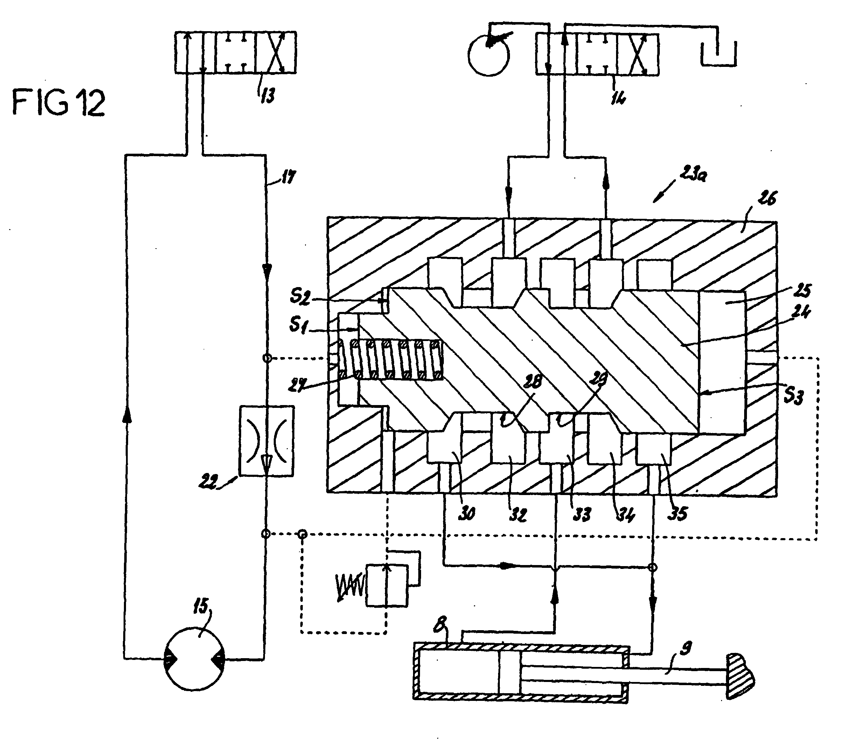

Ce dispositif peut se présenter, par exemple, sous les formes représentées aux figures 4a à 11. Ces figures représentent des étranglements fixes ou réglables de type orifice court (figures 4a et 4b), ou orifice long (figures 5a et 5b), en forme de Venturi (figures 6a et 6b), annulaire (figures 7a et 7b), la partie centrale pouvant être de section circulaire, comme représenté aux figures 7a et 7b, ou de section prismatique (figures 8a et 8b), ou mixte (figures 9a et 9b). Il est également possible de prévoir des étranglements variables comme montré aux figures 10 et 11. Dans le cas d'un étranglement mobile, comme montré à la figure 10, la perte de charge de l'étranglement provoque le déplacement de la partie mobile.

En aval et en amont de l'étranglement, les sections de passage sont très supérieures, comparées à la section de l'étranglement. L'étranglement peut se trouver dans l'axe du système inverseur, et/ou être constitué de plusieurs étranglements de types différents ou similaires. L'ensemble de ces différents types d'étranglement permet de générer une caractéristique de perte de charge proportionnelle à celle du circuit hydraulique du moteur 15. L'information de perte de charge est envoyée au dispositif de compensation 23.

La figure 12 représente un tel dispositif de compensation d'actionnement purement mécanique. Dans cette forme d'exécution, le dispositif de compensation 23a comporte un tiroir 24 monté coulissant dans l'alésage 25 d'un bloc 26. Le tiroir comporte trois sections différentes S1, S2 sur une première face, et S3 sur la face opposée. La surface de la section S3 est égale à la somme des surfaces des sections S1 et S2. La section S1 est reliée à la pression hydraulique du circuit d'alimentation du moteur 15 en amont de l'étranglement 22. La section S2 est reliée à un drain ou à une pression constante. La section S3 est reliée à la pression du circuit hydraulique d'alimentation du moteur 15 en aval de l'étranglement 22. Le rapport des sections S1 et S2 est égal au rapport de la perte de charge du circuit hydraulique entre deux points connus de ce circuit et de la perte de charge entre l'entrée et la sortie de l'étranglement. Un ressort 27 crée une force opposée à la force créée par la pression agissant sur la section S3. La somme de la force créée par la pression constante sur la section S2 et de la charge du ressort 27 est égale à la force créée par la pression hydraulique maximale admissible pour le circuit d'alimentation du moteur 15 agissant sur la section S2.

Dans la forme d'exécution représentée à la figure 12, l'inverseur est intégré au dispositif de compensation 23a. A cet effet, le tiroir 24 comporte deux gorges 28, 29 décalées axialement l'une par rapport à l'autre, tandis que le corps comporte plusieurs rainures 30, 32, 33, 34 et 35 formant partie des deux branches du circuit hydraulique d'alimentation du dispositif d'avance du perforateur pour permettre la circulation du fluide dans deux sens opposés en fonction de la position axiale du tiroir.

La gorge 30 permet de réaliser la fonction d'inversion du sens de déplacement lorsque le tiroir se trouve dans sa position extrême.

En pratique, le fluide hydraulique arrive par la tubulure 17, passe dans l'étranglement 22 pour être envoyé vers le moteur 15, puis revient par la branche de retour. La perte de charge créée dans l'étranglement est proportionnelle à la perte de charge existante dans le circuit de rotation.

Une variation de température et/ou de débit du fluide modifie la perte de charge dans le circuit hydraulique. Cette variation de perte de charge dans le circuit s'accompagne d'une variation de même sens, mais dans un rapport déterminé, de perte de charge dans l'étranglement 22. Cette perte de charge agit sur le tiroir à l'opposé de l'augmentation de la pression de rotation. Le rapport des sections Si et S2 est égal au rapport de la perte de charge du circuit hydraulique entre deux points connus de ce circuit et de la perte de charge entre l'entrée et la sortie de l'étranglement. L'équilibre des forces agissant sur le tiroir n'est pas modifié.

Une augmentation du couple mécanique sur l'outil se traduit par une augmentation de la pression de rotation. Les pertes de charge qui sont indépendantes du couple demeurent les mêmes. Dans ce cas, la résultante des forces appliquées au tiroir évolue et le tiroir se déplace à l'encontre de l'action du ressort vers une nouvelle position d'équilibre telle que celle représentée à la figure 12.

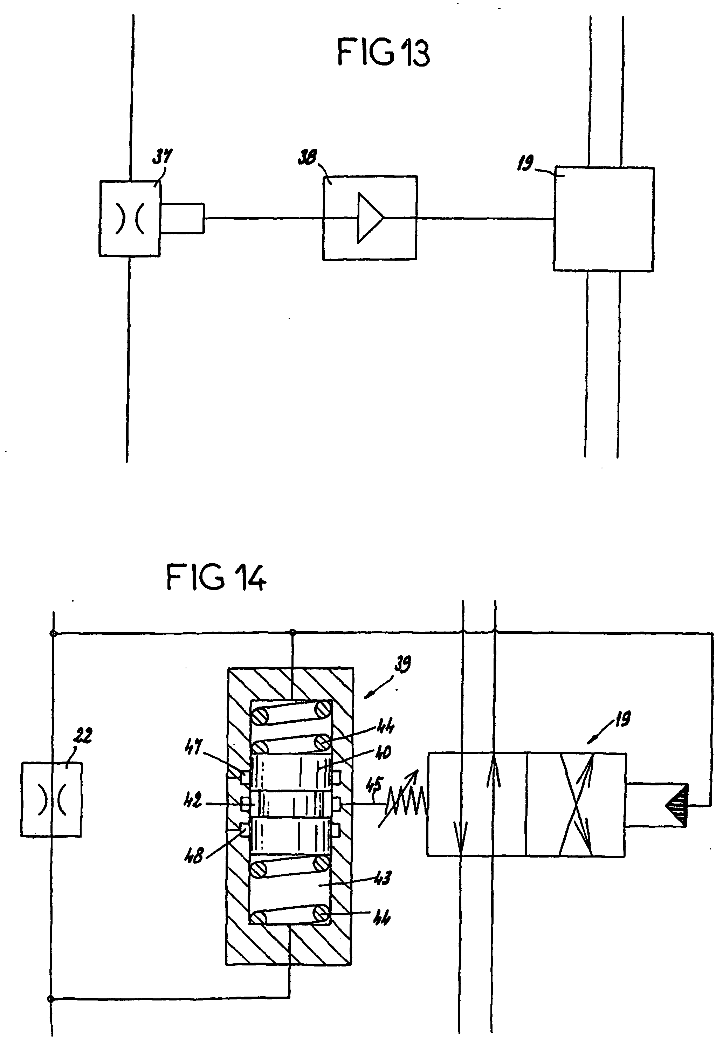

La figure 13 représente un dispositif, dans lequel la mesure est réalisée par un capteur de pression différentielle 37 analogique ou numérique, ou un capteur de température associé à un débitmètre. Le signal généré par ce dispositif de mesure est fourni à un dispositif de compensation 38 constitué par un système électrique ou électronique intégrant une carte de traitement du signal ou un calculateur, et agissant sur l'inverseur de circuit hydraulique 19.

La figure 14 représente un dispositif de forage comportant un étranglement 22 formant dispositif de mesure, associé à un dispositif de compensation 39 constitué par un potentiomètre hydraulique. Ce potentiomètre hydraulique comprend un tiroir 40 comportant une gorge centrale 42 se déplaçant dans un alésage 43 et soumis à l'action de ressort 44. La pression de sortie de la gorge 42 alimente en 45, directement, l'inverseur 19. Les deux faces du tiroir 40 sont soumises aux pressions respectivement en amont et en aval de l'étranglement 42. Deux gorges 47 et 48 ménagées dans le corps du dispositif de compensation sont reliées respectivement à une haute et à une basse pression.

Lorsque la perte de charge de l'étranglement 22 augmente, le tiroir se déplace vers la gorge haute pression 47. La pression de sortie du dispositif compensateur augmente, venant augmenter la pression de rotation maximale admissible réglée sur l'inverseur 19.

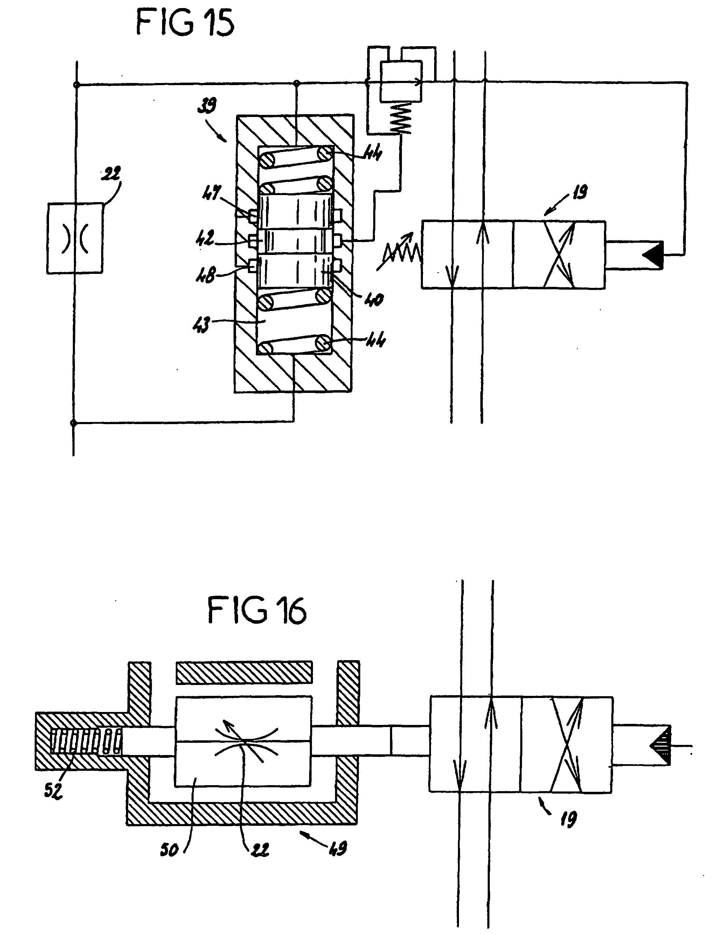

La figure 15 est une variante d'exécution de la figure 14, dans laquelle les mêmes éléments sont désignés par les mêmes références que précédemment. Dans ce cas, l'action sur l'inverseur se fait par diminution de la pression venant actionner l'inverseur.

La figure 16 représente une forme d'exécution dans laquelle un étranglement 22 est intégré dans le dispositif compensateur 49. La transmission de la mesure de perte de charge entre le dispositif de compensation 49 et l'inverseur 19 est mécanique. L'étranglement 22 est soumis à la perte de charge du circuit hydraulique d'alimentation du moteur 15. La différence de pression permet le déplacement d'un tiroir 50 qui modifie la pression de rotation maximale admissible réglée sur le système inverseur par action sur le ressort 52.

Comme il ressort de ce qui précède, l'invention apporte une grande amélioration en fournissant un dispositif permettant d'obtenir sur un système de forage une compensation des pertes de charge du circuit hydraulique entraînant le moteur provoquant la rotation, ce qui permet de conserver un réglage optimal de la valeur maximale du couple de rotation admissible sur toute la plage de fonctionnement du système, tout en mettant en oeuvre des moyens simples.

Comme il va de soi, l'invention ne se limite pas aux seules formes d'exécution de ce dispositif décrites ci-dessus à titre d'exemples, elle en embrasse au contraire toutes les variantes. C'est ainsi notamment que le type de système d'entraînement d'avance du perforateur n'est nullement limitatif et pourrait être réalisé, par exemple, par un moteur hydraulique entraînant un système à pignons et à chaîne sans que l'on sorte pour autant du cadre de l'invention.

## Revendications

1. Dispositif de forage, du type comportant une unité de forage (1) dont l'outil (2) est entraîné en rotation à partir d'un moteur hydraulique (15) associé à un dispositif d'avance (8) permettant de créer une force d'appui de l'unité de forage sur le terrain, les différents organes d'actionnement (3, 8, 15) étant entraînés à partir d'au moins une pompe hydraulique (10), à travers un ensemble de distributeurs hydrauliques (12, 13, 14) et un ensemble de tubulures (16, 17, 18), telles que des flexibles, les deux tubulures (18) d'alimentation du dispositif d'avance du système de forage étant équipées d'un inverseur (19) du sens de circulation du fluide dans le dispositif d'avance, **caractérisé en ce que** sur l'une des branches du circuit d'alimentation (17) du moteur hydraulique d'entraînement de l'outil est monté un dispositif (22, 37) de mesure du débit et de la viscosité du fluide hydraulique dont les caractéristiques de perte de charge sont proportionnelles à celles du circuit hydraulique (17) d'alimentation du moteur d'entraînement en rotation de l'outil, entre deux points connus du circuit situés de part et d'autre du moteur, fournissant en permanence une information de perte de charge à un dispositif de compensation (23, 38, 39, 49) permettant de soustraire la perte de charge calculée créée par l'ensemble des éléments du circuit, de la différence de pression mesurée entre ces deux mêmes points, le dispositif de compensation générant, si le résultat de cette opération dépasse une valeur prédéterminée, un signal d'actionnement de l'inverseur (19) du sens de circulation du fluide d'alimentation du dispositif d'avance.

2. Dispositif de forage selon la revendication 1, **caractérisé en ce que** le dispositif de mesure comporte un étranglement (22) dont les caractéristiques de pertes de charge en fonction du débit et de la viscosité sont proportionnelles à celles du circuit hydraulique (17) d'alimentation du moteur d'entraînement en rotation de l'outil.

3. Dispositif de forage selon la revendication 2, **caractérisé en ce que** le dispositif de compensation (23a) est constitué par un tiroir de régulation (24) monté coulissant dans un alésage (25), présentant, sur l'une de ses faces, une section (S3) soumise à la pression de fluide hydraulique en aval de l'étranglement (22), et sur sa face opposée deux sections (S1, S2) dont la somme est égale à la surface de la première section (S3), dont l'une (S1) est soumise à la pression de fluide hydraulique en amont de l'étranglement (22) et dont l'autre (S2) est soumise à une pression constante, le rapport des deux sections (S1 et S2) étant égal au rapport de la perte de charge du circuit hydraulique entre deux points connus de ce circuit et de la perte de charge entre l'entrée et la sortie de l'étranglement, la perte de charge mesurée créant sur le tiroir un déséquilibre des forces qui génère un déplacement de celui-ci.

4. Dispositif de forage selon la revendication 3, **caractérisé en ce que** l'inverseur est intégré au dispositif de compensation (23a) dont le tiroir (24) comporte plusieurs gorges (28, 29) décalées axialement et formant parties des deux branches du circuit (18) d'alimentation hydraulique du dispositif (8) d'avance du perforateur, pour permettre la circulation du fluide dans deux sens opposés en fonction de la position axiale du tiroir.

5. Dispositif de forage selon la revendication 3, **caractérisé en ce que** le tiroir est relié mécaniquement à l'inverseur (19) et actionne directement celui-ci.

6. Dispositif de forage selon la revendication 3, **caractérisé en ce que** le déplacement du tiroir est mesuré par un dispositif potentiométrique, de type électrique ou hydraulique, qui génère un .signal de sortie qui actionne l'inverseur (19).

7. Dispositif de forage selon la revendication 1, **caractérisé en ce qu'**il comporte un dispositif de mesure électrique ou électronique constitué par un capteur de pression différentielle (37) analogique ou numérique ou un capteur de température associé à un débitmètre, générant un signal actionnant un système de compensation hydraulique (38) ou électrique agissant sur l'inverseur (19).

8. Dispositif de forage selon la revendication 2, **caractérisé en ce qu'**il comporte un potentiomètre (39) hydraulique ou pneumatique possédant un tiroir (40) dont les extrémités sont soumises aux pressions hydrauliques respectivement en amont et en aval de l'étranglement (22) et présentant une gorge centrale (42) alimentant l'inverseur (19) soit à partir d'une gorge (47) reliée à une source haute pression, soit à une gorge (48) reliée à une source basse pression, suivant la position du tiroir.

## Patentansprüche

1. Bohreinrichtung mit einer Bohreinheit (1), deren Werkzeug (2) von einem Hydraulikmotor (15) gedreht wird, der einer Vorschubeinrichtung (8) zugeordnet ist, die es gestattet, eine Auflagekraft der Bohreinheit auf dem Gelände zu erzeugen, wobei die verschiedenen Betätigungsglieder (3, 8, 15) von mindestens einer Hydraulikpumpe (10) über eine Gruppe von Hydraulikverteilern (12, 13, 14) und einer Gruppe von Rohrleitungen bzw. Schlauchleitungen (16, 17, 18) wie z.B. biegsame Schläuche angetrieben werden, wobei die beiden Versorgungsrohre bzw. Versorgungsschläuche (18) der Vorschubeinrichtung des Bohrsystems mit einer Vorrichtung (19) zur Umkehrung der Zirkulationsrichtung des Fluids in der Vorschubeinrichtung ausgestattet sind, **dadurch gekennzeichnet, dass** auf einem der Zweige des Versorgungskreises (17) des Hydraulikmotors zum Antrieb des Werkzeugs zwischen zwei bekannten Punkten des Kreises, die sich beiderseits des Motors befinden, eine Vorrichtung (22, 37) zur Messung des Durchsatzes und der Viskosität des Hydraulikfluids montiert ist, deren Druckabfall-Eigenschaften proportional zu denjenigen des Hydraulikreises (17) zur Versorgung des Motors für den Drehantrieb des Werkzeugs sind und die ständig eine Druckabfall-Information an eine Kompensationsvorrichtung (23, 38, 39, 49) liefert, wodurch ermöglicht wird, den berechneten Druckabfall, der durch die Gruppe der Elemente des Kreises erzeugt wird, von der zwischen diesen beiden Punkten gemessenen Druckdifferenz zu subtrahieren, wobei die Kompensationsvorrichtung dann, wenn das Ergebnis dieser Operation einen vorbestimmten Wert übersteigt, ein Betätigungssignal der Vorrichtung (19) zum Umkehren der Zirkulationsrichtung des Versorgungsfluids der Vorschubeinrichtung erzeugt.

2. Bohreinrichtung nach Anspruch 1, **dadurch gekennzeichnet, dass** die Meßvorrichtung eine Verengung (22) aufweist, deren Druckabfall-Eigenschaften in Abhängigkeit von Durchsatz und der Viskosität proportional zu denjenigen des Hydraulikkreises (17) für die Versorgung des Motors für den Drehantrieb des Werkzeugs sind.

3. Bohreinrichtung nach Anspruch 2, **dadurch gekennzeichnet, dass** die Kompensationsvorrichtung (23a) durch einen Regelschieber (24) gebildet ist, der in einer Bohrung (25) gleitend gelagert ist und auf einer seiner Flächen einen Abschnitt (S3) aufweist, der dem Druck des Hydraulikfluids stromab von der Verengung (22) ausgesetzt ist, und auf seiner entgegengesetzten Fläche zwei Abschnitte (S1, S2) aufweist, deren Summe gleich der Oberfläche des ersten Abschnitts (S3) ist, wobei der eine Abschnitt (S1) dem Druck des Hydraulikfluids stromauf von der Verengung (22) ausgesetzt ist und der andere Abschnitt (S2) einen konstanten Druck ausgesetzt ist, wobei das Verhältnis der beiden Abschnitte (S1 und S2) gleich dem Verhältnis zwischen dem Druckabfall des Hydraulikkreises zwischen zwei bekannten Punkten dieses Kreises und dem Druckabfall zwischen dem Eingang und dem Ausgang der Verengung ist, wodurch der gemessene Druckabfall an dem Schieber ein Kräfteungleichgewicht erzeugt, das dessen Verschiebung bewirkt.

4. Bohreinrichtung nach Anspruch 3, **dadurch gekennzeichnet, dass** die Umkehrvorrichtung in die Kompensationseinrichung (23a) integriert ist, deren Schieber (24) mehrere Rillen (28, 29) aufweist, die axial versetzt sind und Teile der beiden Zweige des Hydraulik-Versorgungskreises (18) der Vorschubeinrichtung (8) des Lochers bilden, um die Zirkulation des Fluids in den beiden entgegengesetzten Richtungen in Abhängigkeit von der axialen Stellung des Schiebers zu gestatten.

5. Bohreinrichtung nach Anspruch 3, **dadurch gekennzeichnet, dass** der Schieber mit der Umkehrvorrichtung (19) mechanisch verbunden ist und diese unmittelbar betätigt.

6. Bohreinrichtung nach Anspruch 3, **dadurch gekennzeichnet, dass** die Verschiebung des Schiebers durch eine Potentiometer-Vorrichtung elektrischer oder hydraulischer Bauart gemessen wird, die ein Ausgangssignal erzeugt, das die Umkehrvorrichtung (19) betätigt.

7. Bohreinrichung nach Anspruch 1, **dadurch gekennzeichnet, dass** sie eine elektrische oder elektronische Meßvorrichtung aufweist, die durch einen analogen oder digitalen Differenzdruck-Sensor (37) oder einen einem Durchflußmesser zugeordneten Temperatursensor gebildet ist, der ein Signal erzeugt, das ein auf die Umkehrvorrichtung (19) einwirkendes hydraulisches (38) oder elektrisches Kompensationssystem betätigt.

8. Bohreinrichtung nach Anspruch 2, **dadurch gekennzeichnet, dass** sie ein hydraulisches oder pneumatisches Potentiometer (39) aufweist, das einen Schieber (40) besitzt, dessen Enden den hydraulischen Drücken stromauf bzw. stromab von der Verengung (22) ausgesetzt sind und eine mittige Nut bzw. Rille (42) haben, welche die Umkehrvorrichtung (19) entweder von einer mit einer Hochdruckquelle verbundenen Nut (47) oder von einer mit einer Niederdruckquelle verbundenen Nut (48) je nach der Stellung des Schiebers versorgt.

## Claims

1. A drilling device of the type comprising: a drilling unit (1), the tool (2) of which is driven in rotation by a hydraulic motor (15) associated with an advancing device (8) enabling a bearing force of the drilling unit on the ground to be created, the different actuating members (3, 8, 15) being driven by at least a hydraulic pump (10) via a set of hydraulic distributors (12, 13, 14) and a set of tubes (16, 17, 18) such as hoses, two feed tubes (18) of the advancing device of the drilling system being equipped with a switch (19) for reversing the direction of circulation of the fluid in the advancing device, **characterized in that** mounted on one of the branches of the feed circuit (17) of the hydraulic motor driving the tool is a device (22, 37) for measuring the flow rate and viscosity of the hydraulic fluid, whose head loss characteristics are proportional to those of the hydraulic feed circuit (17) of the motor driving the tool in rotation, constantly supplying information on head loss to a compensation device (23, 38, 39, 49) for subtracting the calculated head loss created by all the members of the circuit between two known points **in that** circuit, situated on either side of the motor, from the pressure difference measured between those same two points, the compensation device generating a signal to actuate the switch (19) for reversing the direction of circulation of the fluid feeding the advancing device, if the result of this operation exceeds a given value.

2. A drilling device according to claim 1, **characterized in that** the measurement device includes a throttle (22), whose head loss characteristics as a function of flow rate and viscosity are proportional to those of the feed circuit (17) of the motor driving the tool in rotation.

3. A drilling device according to claim 2, **characterized in that** the compensation device (23a) comprises a regulatory slide valve (24) mounted to slide in a bore (25), having, on one of its faces, a section (S3) subjected to the pressure of hydraulic fluid downstream of the throttle (22), and on its opposite face two sections (S1, S2) whose sum is equal to the surface area of the first section (S3), of which one section (S1) is subjected to the pressure of hydraulic fluid upstream of the throttle (22) and the other section (S2) is subjected to a constant pressure, the ratio between the two sections (S1 and S2) being equal to the ratio between the head loss in the hydraulic circuit between two known points in this circuit and the head loss between the intake and output of the throttle, the measured head loss creating an imbalance of the forces on the slide valve which displaces the latter

4. A drilling device according to claim 3, **characterized in that** the reverser is integrated in the compensation device (23a), the slide valve (24) of which includes a plurality of channels (28, 29), offset axially and forming parts of the two branches of the hydraulic feed circuit (18) of the drill advancing device (8), to enable the fluid to circulate in two opposing directions as a function of the axial position of the slide valve.

5. A drilling device according to claim 3, **characterized in that** the slide valve is mechanically connected to the reverser (19) and actuates the latter directly.

6. A drilling device according to claim 3, **characterized in that** the displacement of the slide valve is measured by a potentiometric device of the electric or hydraulic type which generates an output signal that actuates the reverser (19).

7. A drilling device according to claim 1, **characterized in that** it Includes an electronic or electronic measurement device comprising an analogue or digital differential pressure sensor (37) or a temperature sensor associated with a flowmeter, generating a signal actuating a hydraulic or electrical compensation system (38) acting on the reverser (19).

8. A drilling device according to claim 2, **characterized in that** it comprises a hydraulic or pneumatic potentiometer (39) having a slide valve (40) whose ends are subjected to the hydraulic pressures upstream and downstream of the throttle (22), respectively, and having a central channel (42) feeding the reverser (19) either from a channel (47) connected to a high-pressure source or from a channel (48) connected to a low-pressure source, depending on the position of the slide valve.
